Europäisches Patentamt

European Patent Office

Office européen des brevets

(19)

(11) Numéro de publication: **0 356 396 B1**

# (12) FASCICULE DE BREVET EUROPEEN

(45) Date de publication de fascicule du brevet: **09.03.94** (51) Int. Cl.⁵: **H02K 37/12**, G04C 13/11

(21) Numéro de dépôt: **89810617.4**

(22) Date de dépôt: **18.08.89**

(54) **Moteur pas à pas multipolaire.**

(30) Priorité: **25.08.88 CH 3162/88**

(43) Date de publication de la demande:
**28.02.90 Bulletin 90/09**

(45) Mention de la délivrance du brevet:
**09.03.94 Bulletin 94/10**

(84) Etats contractants désignés:
**AT BE CH DE ES FR GB GR IT LI LU NL SE**

(56) Documents cités:
**DE-A- 2 950 210**
**FR-A- 2 406 907**
**GB-A- 1 531 314**
**GB-A- 2 062 367**

**PATENT ABSTRACTS OF JAPAN vol. 3, no.**
**13 (E-88)(65E88) 07 février 1979, & JP-A-53**
**140518 (MATSUSHITA) 07 décembre 1978**

(73) Titulaire: **Scholer AG**
**Allmendstrasse 148**
**CH-4938 Rohrbach b. Huttwil(CH)**

(72) Inventeur: **Tu, Mai Xuan**
**Blancherie, 34**
**CH-1022 Chavannes(CH)**
Inventeur: **Schwab, Michel**
**Rue du Cornouiller, 4**
**CH-2502 Bienne(CH)**

(74) Mandataire: **Fischer, Franz Josef et al**
**BOVARD SA**
**Ingénieurs-Conseils ACP**
**Optingenstrasse 16**
**CH-3000 Bern 25 (CH)**

## Description

La présente invention a pour objet un moteur pas à pas multipolaire comportant un rotor à aimantation permanente avec N paires de pôles réparties autour d'un axe central et aimantées dans une direction parallèle à cet axe, et un circuit magnétique statorique comportant une bobine montée sur un noyau.

On cherche depuis longtemps à construire des moteurs multipolaires de ce genre susceptibles de présenter un nombre de paires de pôles relativement élevé tout en étant d'une fabrication peu coûteuse et présentant un encombrement réduit.

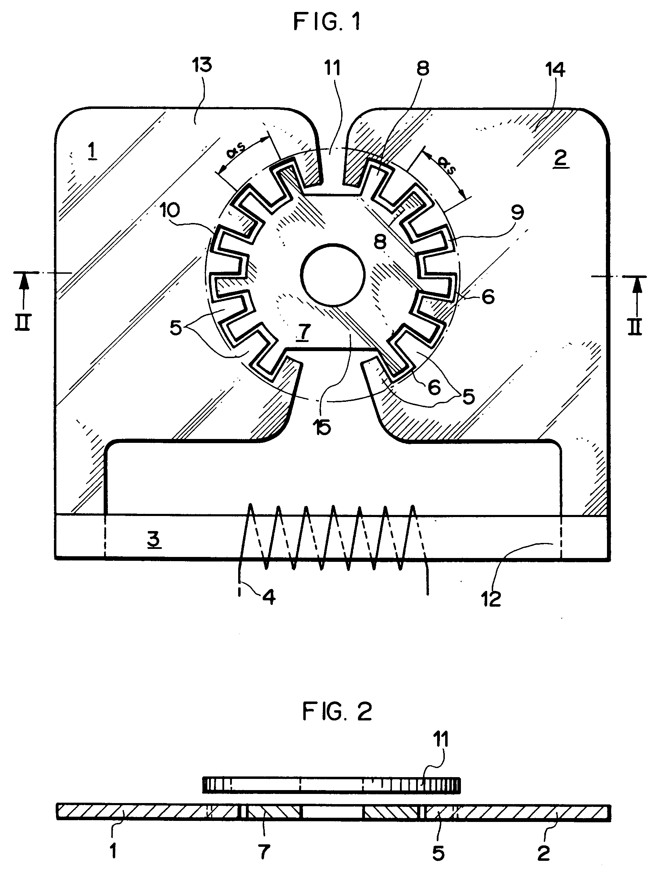

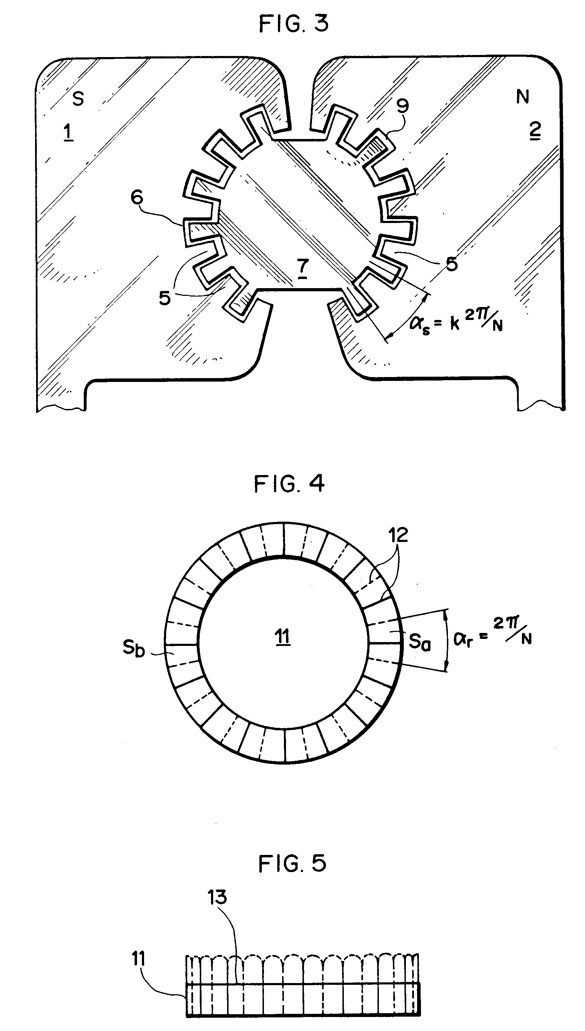

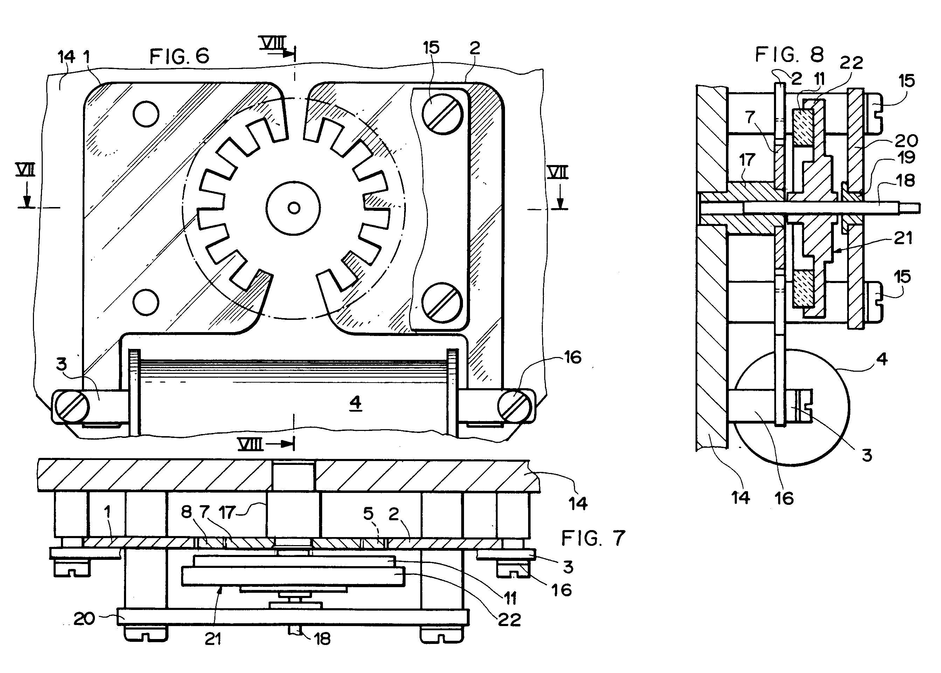

On connaît des moteurs de ce genre, notamment par les fascicules de brevet CH-599 707, US-4 713 565 et FR-2 406 907. Dans le premier de ces fascicules sont décrites deux formes d'exécution qui sont représentées par les fig. 1 et 2, d'une part, 5 et 6, d'autre part. Dans l'exemple d'exécution représenté par les fig. 1 et 2, le rotor en forme de disque est placé dans l'entrefer formé par les pièces polaires 1a et 5, 5a. L'ensemble de ces trois éléments est, de plus, placé sur une bobine cylindrique 6 et sur la pièce annulaire 2. Une telle disposition présente une grande perte de place en hauteur et une complication au montage. Dans l'exemple d'exécution représenté par les fig. 5 et 6, on retrouve la même superposition des pièces polaires 51a et 55a. Dans le fascicule de brevet US-4 713 565, on trouve la description d'un moteur dont les pièces polaires statoriques sont également placées sur des plans différents de part et d'autre de celui de l'aimant, ce qui représente une perte de place en hauteur. De plus, les bras des stators intérieurs, désignés par 14a et 14b ont une largeur qui est pratiquement la même que celle d'un pôle rotorique. Comme ces stators intérieurs ne sont reliés au support de stator que par un seul bras chacun, on comprend que cette construction conduit à des problèmes de fabrication, de même qu'à des problèmes de tenue mécanique et de saturation magnétique si le nombre des pôles du rotor est grand, étant donné la faible largeur qui reste à disposition pour les bras de liaison.

Les moteurs pas à pas multipolaires décrits dans le document FR-2 406 907 sont aussi du type comportant un rotor à aimantation permanente avec N paires de pôles répartis autour d'un axe central et aimantés dans une direction parallèle à cet axe, et un circuit magnétique statorique comportant un enroulement monté sur un noyau. De plus, ils comportent deux pièces polaires principales s'étendant en face l'une de l'autre, dans un même plan perpendiculaire au dit axe, chacune de ces pièces est connectée à une des extrémités du noyau et présente un bord concave pourvu de dents polaires distribuées autour de l'axe, et le rotor s'étend dans un plan parallèle à celui des pièces polaires.

Toutefois, cette construction ne remédie pas dans toute la mesure désirable aux inconvénients mentionnés plus haut et notamment à ceux des réalisations selon US-4 713 565. En particulier, le problème de la tenue du palier inférieur de l'arbre du rotor n'est toujours pas résolu d'une manière satisfaisante.

Le but de la présente invention est d'améliorer la construction des moteurs connus, du genre précité, de manière à augmenter la précision du positionnement du rotor par rapport au stator et la forme du flux magnétique qui apparaît lors des impulsions, afin d'obtenir un entraînement précis et fiable du moteur. On peut ainsi réaliser un moteur pas à pas à 60 pas par tour, dans une construction simple et de faible hauteur, et cela sans concession importante sur le rendement.

Pour atteindre le but indiqué, l'objet de la présente invention est caractérisé en ce qu'une pièce polaire intermédiaire est placée entre les pièces polaires principales et présente des dents intermédiaires situées en regard des dites dents polaires et engagées entre elles.

On va décrire ci-après, à titre d'exemple, une forme d'exécution d'un moteur selon l'invention en se référant au dessin annexé dont

la fig. 1 est une vue en plan de dessus schématique du circuit magnétique,

la fig. 2 est une vue en coupe également schématique du circuit de la fig. 1 selon la ligne II-II de cette figure,

les fig. 3, 4 et 5 sont des vues schématiques, respectivement en plan et en élévation, du circuit magnétique, et du rotor du moteur décrit, permettant d'expliquer son fonctionnement,

les fig. 6, 7 et 8 sont des vues, respectivement en plan de dessus, en coupe selon la ligne VII-VII et en coupe selon la ligne VIII-VIII de l'ensemble du moteur décrit,

la fig. 9 est un schéma expliquant l'étude de l'optimalisation des caractéristiques constructives du moteur et

la fig. 10 un autre graphique également relatif à l'étude d'optimalisation des caractéristiques.

Le moteur qui va être décrit est un moteur multipolaire monophasé, comportant deux pièces polaires principales 1 et 2, connectées magnétiquement aux extrémités d'un noyau 3 portant une bobine d'excitation 4. Dans l'exemple schématique de la fig. 1, les pièces polaires 1 et 2 sont entièrement planes et connectées au noyau 3 par recouvrement. La liaison peut être réalisée par soudage ou autrement. Dans une variante, on pourrait prévoir que l'une des pièces polaires soit façonnée, par exemple par découpage d'une pièce avec le noyau. Dans ce cas, l'autre pièce polaire devrait présenter un pliage pour que sa languette de raccordement s'étende en contact avec l'une des faces frontales du noyau. Le matériau des pièces polaires 1 et 2, ainsi que du noyau 3 sera un métal ferromagnétique à limite de saturation élevée et faible rémanence.

Un dispositif électronique (non représenté) envoie périodiquement des impulsions de polarité alternée dans la bobine 4 de façon que chacune des deux pièces polaires principales 1 et 2 joue alternativement le role de pôle magnétique nord et de pôle magnétique sud. Comme on le voit à la fig. 2, les deux pièces polaires principales 1 et 2 sont coplanaires. Elles sont situées en regard l'une de l'autre et présentent chacune un bord intérieur d'allure concave, découpé avec un profil qui présente un certain nombre de dents polaires 5. Dans le cas représenté à la fig. 1, les dents polaires 5 sont de forme trapézoïdale et séparées par des zones intercalaires 6 dont les bords sont des segments d'arc de cercle centrés sur un axe, perpendiculaire au plan des pièces polaires 1 et 2. Cet axe central coïncide avec l'axe du rotor du moteur.

Dans la forme d'exécution décrite ici, les dents polaires de chacune des deux pièces 1 et 2 forment un groupe de sept dents ayant un pas polaire statorique $\alpha$s. Les dents 5 situées aux deux extrémités du groupe dans chacune des pièces polaires 1 et 2, sont situées, comme on le voit à la fig. 1, en regard d'une dent 5 homologue de la pièce polaire opposée et chacune de ces paires de dents 5 homologues délimite un entrefer d'une certaine largeur. Comme on le voit à la fig. 1, les deux entrefers en question ne sont pas de même largeur mais cette disposition n'est pas critique pour l'obtention du but visé. En effet, on constate que, entre les deux pièces polaires 1 et 2, est disposée une pièce polaire intermédiaire 7 qui est également une plaque plane, de même épaisseur que les pièces 1 et 2, également en une matière ferro-magnétique à faible rémanence et à limite de saturation élevée. Cette pièce intermédiaire est de forme générale circulaire avec, sur son bord périphérique, deux groupes de dents intermédiaires 8 qui sont disposées selon un profil complémentaire de celui des dents polaires 5 et qui sont imbriquées entre les dents polaires 5, de façon à déterminer, entre la pièce 7 et chacune des pièces 1 et 2, des entrefers sinueux de largeur sensiblement constante mais faible, désignés respectivement par 9 et 10 à la fig. 1.

Le champ magnétique, qui s'étend dans l'espace voisin des entrefers 9 et 10 au moment des impulsions, coopère avec un rotor 11, qui est constitué d'un disque ou d'un anneau plat, en aimant permanent qui présente une aimantation multipolaire avec des pôles alternativement nord et sud, répartis à la périphérie du rotor selon une direction d'aimantation qui est parallèle à l'axe, c'est-à-dire perpendiculaire au plan du circuit magnétique 1, 7, 2, 3.

Les fig. 3, 4 et 5 montrent comment le rotor 11, qui est représenté schématiquement, coopère avec les pièces polaires 1 et 2. On voit aux fig. 4 et 5 que l'aimantation du rotor 11 est conçue de telle manière que les pôles 12 sont tous apparents sur une des faces 13 du rotor. Le long du bord de cette face 13, on a donc une répartition alternée de pôles nord et sud avec un pas polaire qui a la valeur $\alpha$r. Dans l'exemple représenté au dessin, le rotor 11 est aimanté avec trente-deux pôles, c'est-à-dire seize paires de pôles, de sorte que le pas angulaire $\alpha$r est égal à $2\pi/16$. L'allure du champ magnétique développé dans l'espace par les pôles 12 est visible schématiquement à la fig. 5.

La fig. 3 montre une caractéristique optionnelle du moteur décrit. Alors que le pas angulaire des paires de pôles du rotor 11 est égal à $\alpha$r, comme on le voit à la fig. 4, le pas angulaire $\alpha$s des dents polaires de chacune des pièces 1 et 2 est légèrement différent du pas polaire $\alpha$r. En fait, comme on le verra plus loin, il peut être choisi à une valeur qui sera comprise généralement entre 0,8 et 1,2 x $\alpha$r afin de réduire, dans la mesure qui paraît la plus désirable, les couples parasites qui, autrement, pourraient perturber le fonctionnement du moteur. En principe, ce fonctionnement est le suivant: Si l'on imagine une impulsion de longue durée polarisant la pièce 2 en pôle nord et la pièce 1 en pôle sud (fig. 3), le rotor 11 (fig. 4) va s'immobiliser dans une position telle qu'un axe magnétique rotorique défini par exemple par une ligne diamétrale entre deux pôles opposés $S_a$ et $S_b$ se place symétriquement par rapport à l'axe magnétique statorique des pièces polaires 1 et 2. Comme on le sait, avec un moteur de ce genre, il faut prévoir, lors d'un fonctionnement pas à pas, qu'en l'absence d'impulsion, le rotor s'oriente spontanément dans une direction différente de cette orientation d'immobilisation. Pour cela, on prévoiera, par exemple, dans des endroits déterminés des pièces 1, 2 et/ou 7 des ouvertures ou des éléments de profil asymétriques de façon à imposer au rotor une position de repos légèrement différente de celle qui est représentée à la fig. 3. On comprend que, lors de l'impulsion suivante, si la pièce 1 est polarisée en pôle nord et la pièce 2 en pôle sud, le rotor subira un couple moteur qui le fera tourner d'un pas, c'est-à-dire d'un angle égal à $\frac{1}{2}\alpha$r = $2\pi/2N$, de sorte que le pôle $S_b$ viendra se placer symétriquement sur une des dents 5 de la pièce 1.

Du fait que le pas angulaire des dents du stator est légèrement différent, ici légèrement plus grand, que le pas angulaire des paires de pôles du rotor, les pôles voisins de ceux qui ont été désignés $S_a$

et $S_b$ à la fig. 4 ne se trouveront pas dans des positions symétriques par rapport aux dents 5 des pièces polaires 1 et 2 (fig. 3) qu'elles recouvrent. C'est cette disposition qui aura pour effet, comme on le verra plus loin, d'atténuer ou même de supprimer certains couples parasites.

Avant d'examiner plus en détail la détermination des conditions permettant de maîtriser ces couples parasites, on décrira rapidement ci-après en se référant aux fig. 6, 7 et 8, un exemple d'application du moteur décrit dans un cas pratique. Les deux pièces polaires 1 et 2 sont fixées par l'intermédiaire des socles à vis 15 et 16 sur une plaque de base 14, de façon à se trouver dans le même plan parallèle à celui de la plaque 14. Elles sont disposées de la même façon qu'aux fig. 1 et 3 et les socles à vis 16 assujettissent également, par rapport à la plaque 14, le noyau 3 sur lequel est montée la bobine d'excitation 4. La pièce polaire intermédiaire 7 est fixée sur un support 17 en plusieurs parties, engagé dans un trou central de la plaque 14 en jouant simultanément le rôle de palier pour un arbre 18 du rotor 21 et de pièce de maintien pour la pièce intermédiaire 7. Un autre palier 19 guidant l'arbre 18 est fixé à une plaque de couverture 20, de forme rectangulaire, qui est maintenue à distance de la plaque de base 14 par les socles à vis 15.

L'ensemble rotorique 21 du moteur décrit comporte une armature 22, dont le profil est visible à la fig. 8, que traverse l'arbre 18 et dans lequel l'anneau aimanté 11 du rotor est fixé par sertissage. L'arbre 18 s'étend en saillie au-dessus de la plaque 20 et peut recevoir un élément d'accouplement qui supporte n'importe quel élément devant être entraîné par le rotor. Dans une exécution en grande série, l'ensemble rotorique désigné par 21 pourrait être fabriqué en tout ou partie par une opération d'injection d'une matière magnétique comme, par exemple le plastoferrite.

On reviendra maintenant sur une des caractéristiques de la construction décrite grâce à laquelle il est possible de déterminer librement certains paramètres constructifs en fonction des performances que l'on désire réaliser.

Comme on le voit à la fig. 3, grâce à la présence de la pièce polaire intermédiaire 7, le flux magnétique qui se développe dans l'espace au moment des impulsions est strictement canalisé par l'entrefer sinueux 9.

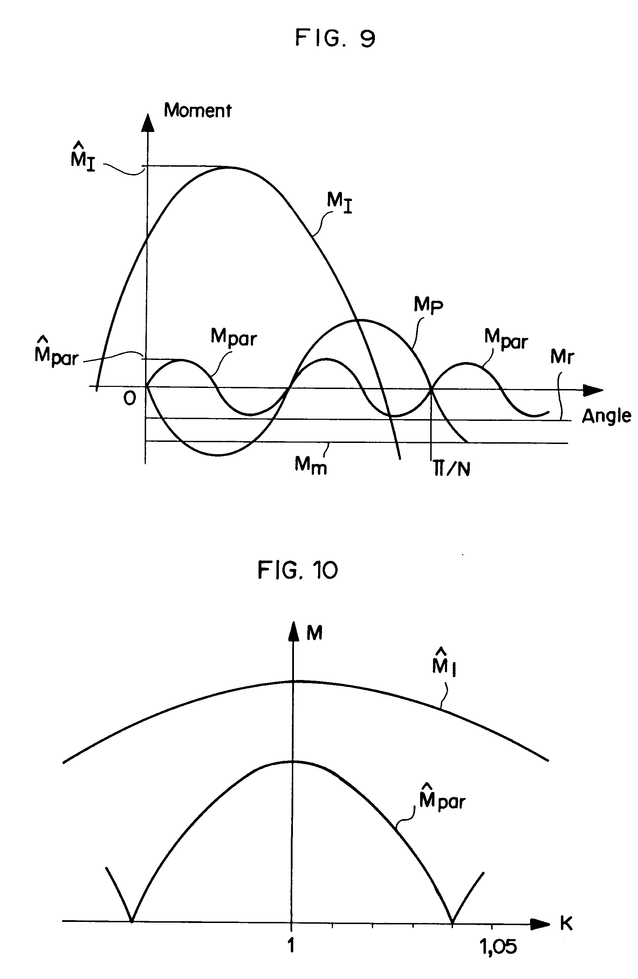

Le graphique de la fig. 9 montre l'allure des différents couples dont il faut tenir compte pour dimensionner le moteur. La courbe du couple $M_i$ représente le moment de force qui s'exerce sur le rotor au moment de l'impulsion en fonction de sa position angulaire par rapport au stator. C'est une courbe périodique dont la période est égale à $\alpha s = 2\pi/N$. La courbe $M_P$ représente le couple de blocage qui assure le positionnement du rotor durant les périodes entre les impulsions. Sa période est égale à $\alpha s/2$, soit $2\pi/2N$. La courbe désignée par $M_{par}$ représente un des multiples couples parasites dont la présence dépend de la forme des dents polaires et du pas de ces groupes de dents qui ont été désignés par 5 à la fig. 1. L'allure de cette courbe peut être modifiée par un choix judicieux du paramètre k qui donne le rapport entre le pas de la denture polaire et le pas des pôles du rotor. Ces couples parasites sont les harmoniques de rang supérieur du couple de positionnement $M_i$. Suivant les cas, on peut voir intérêt à faire disparaître l'harmonique 2 ou l'harmonique 4. C'est par un choix judicieux du rapport k que l'on pourra faire apparaître ce résultat. Enfin, la ligne $M_r$ indique le couple de résistance par frottement, dû au palier. Le couple $M_m$ représente la somme des couples mécaniques externes agissant sur le rotor comme, par exemple, le couple de frottement dans le rouage, le couple de balourd des aiguilles, etc.

Des études expérimentales ont été effectuées sur un prototype et ont permis de reconnaître que l'on peut établir, par rapport à un prototype donné, un graphique, du genre de celui de la fig. 10, qui donne l'allure de la variation des amplitudes des couples $M_i$ et $M_{par}$ en fonction de la valeur que l'on choisit pour le paramétre k. Dans le cas de figure représenté à la fig. 10, le moment parasite $M_{par}$ est le moment de l'harmonique 2 de $M_P$ et l'on voit par exemple que ce moment parasite peut être éliminé par un choix d'une valeur de 1,04 pour le coefficient k. Alors que le choix de ce coefficient conduit à une légère réduction de l'amplitude de $M_i$, cette réduction n'est toutefois pas importante.

Ainsi, la disposition décrite plus haut permet non seulement de réaliser un moteur de faibles dimensions, et en particulier de faible hauteur, susceptible d'être construit facilement avec un nombre de pas par tour élevé, et notamment permettant d'atteindre facilement une valeur de soixante pas par tour, mais également le dimensionnement de ce moteur peut être étudié de façon telle que les conditions de fonctionnement soient optimales, en particulier que la consommation de courant soit aussi réduite que possible. Ce moteur permet de réaliser notamment des pièces d'horlogerie dans lesquelles l'aiguille des secondes peut être montée directement sur l'arbre moteur, ce qui réduit considérablement l'importance des trains d'engrenage nécessaires.

Comme on l'a vu à la fig. 5, dans la forme d'exécution décrite, l'aimantation du rotor a pour effet que tous les pôles se succèdent sur la même face de l'anneau aimanté. On pourrait cependant concevoir une autre forme d'exécution comportant un rotor dont l'aimantation est purement parallèle à l'axe, c'est-à-dire dont les deux faces sont aimantées et les secteurs polaires de l'une des faces sont toujours directement opposés à des secteurs polaires de nom opposé sur l'autre face. Dans une autre variante encore, les moyens de blocage du rotor destinés à l'immobiliser entre les impulsions pourraient être formés par des éléments ferromagnétiques disposés en face du bord du rotor ou de sa face frontale opposée aux pièces polaires. De nombreuses variantes de l'exécution décrite sont possibles.

En particulier, dans une forme d'exécution de l'invention, le rotor comporte trente paires de pôles réparties sur une de ses faces frontales.

**Revendications**

1. Moteur pas à pas multipolaire comportant un rotor (11) à aimantation permanente avec N paires de pôles (12) répartis autour d'un axe central et aimantés dans une direction parallèle à cet axe, et un circuit magnétique statorique comportant un enroulement (4) monté sur un noyau (3), et deux pièces polaires principales (1, 2) s'étendant en face l'une de l'autre dans un même plan perpendiculaire au dit axe, chacune de ces pièces étant connectée à une extrémité du noyau, et présentant un bord concave pourvu de dents polaires (5) distribuées autour du dit axe et le rotor (11) s'étendant dans un plan parallèle à celui des pièces polaires, caractérisé en ce qu'une pièce polaire intermédiaire (7) est placée entre les pièces polaires principales (1, 2) et présente des dents intermédiaires (8) situées en regard des dites dents polaires et engagées entre elles.

2. Moteur selon la revendication 1, caractérisé en ce que les profils des bords de la pièce polaire intermédiaire (7) et des pièces polaires principales (1, 2) sont complémentaires et délimitent un entrefer sinueux de largeur au moins approximativement constante.

3. Moteur selon la revendication 2, caractérisé en ce que le pas angulaire ($\alpha$s) des dites dents polaires est différent de celui des pôles du rotor.

4. Moteur selon la revendication 3, caractérisé en ce que le pas angulaire des dents polaires $\alpha$s est donné par la formule suivante $\alpha s = k \cdot 2\pi/N$ dans laquelle k est compris entre 0,8 et 1,2 et $2\pi/N$ est égal au pas angulaire des pôles du rotor $\alpha$r.

5. Moteur selon la revendication 1, caractérisé en ce que le circuit magnétique statorique présente au moins un élément asymétrique de retenue, apte à maintenir le rotor durant les périodes entre les impulsions dans une position angulaire telle qu'un couple d'entraînement agisse sur lui lorsqu'un courant circule dans l'enroulement.

6. Moteur selon la revendication 5, caractérisé en ce que le dit élément asymétrique est constitué par une série d'ouvertures ménagées dans les pièces polaires principales ou/et dans la pièce polaire intermédiaire.

7. Moteur selon l'une quelconque des revendications précédentes, caractérisé en ce que le rotor comporte trente paires de pôles réparties sur une de ses faces frontales tournée vers les dites pièces polaires principales.

**Claims**

1. Multipolar stepping motor comprising a permanently magnetized rotor (11) with N pairs of poles (12) distributed about a central axis and magnetized in a direction parallel thereto and a magnetic stator circuit comprising a winding (4) mounted on a core (3), and two main pole pieces (1, 2) facing one another in the same plane perpendicular to said axis, each of the pole pieces being connected to an end of the core and having a concave rim provided with pole teeth distributed about said axis, and the rotor (11) being situated in a plane parallel to that of the pole pieces wherein an intermediate pole piece (7) is disposed between the main pole pieces (1, 2) and has intermediate teeth (8) situated opposite said pole teeth and meshing therewith.

2. Motor according to claim 1, wherein the contours of said intermediate pole piece (7) and of said main pole pieces (1, 2) are complementary and bound a sinuous air gap of substantially constant width.

3. The motor according to claim 2, wherein the angular pitch ($\text{Á}$s) of said pole teeth is different from that of said poles of said rotor.

4. Motor according to claim 3, wherein the angular pitch $\text{Á}$s of said pole teeth is defined by the equation $\text{Á}s = k \cdot 2\text{Đ}/N$, wherein k is a factor between 0.8 and 1.2, and $2\text{Đ}/N$ is equal to the angular pitch $\text{Á}$r of said poles of said rotor.

5. The motor of claim 1, wherein said magnetic stator circuit includes at least one asymmetrical holding element capable of maintaining said rotor during the periods between pulses in an angular position such that a driving torque acts upon said rotor when a current passes through the winding.

6. The motor of claim 5, wherein said asymmetrical element is composed of a series of apertures contrived in the main pole pieces and/or in the intermediate pole piece.

7. Motor according to one of the preceding claims, wherein the rotor includes thirty pairs of poles distributed on one of its front faces turned toward said main pole pieces.

**Patentansprüche**

1. Vielpoliger Schrittmotor mit einem Rotor (11) mit permanenter Magnetisierung und mit N-Polpaaren (12), die um eine zentrale Achse verteilt und in einer Richtung parallel zu dieser Achse magnetisiert sind, mit einem magnetischen Statorkreis mit einer Wicklung (4), die auf einem Kern (3) montiert ist, und mit zwei Hauptpolteilen (1, 2), die sich einander gegenüberliegend in einer gleichen Ebene rechtwinklig zur genannten Achse ausbreiten, wobei jeder dieser Teile mit einem Ende des Kernes verbunden ist und einen konkaven Rand aufweist, der mit polaren Zähnen (5) versehen ist, die um die genannte Achse verteilt sind und wobei sich der Rotor (11) in einer Ebene, die parallel zu derjenigen der Polteile verläuft, erstreckt, dadurch gekennzeichnet, dass ein Zwischenpolteil zwischen den Hauptpolteilen angeordnet ist, welcher Zwischenzähne aufweist, die zu den genannten polaren Zähnen gerichtet und zwischen diesen im Eingriff sind.

2. Motor nach Anspruch 1, dadurch gekennzeichnet, dass die Konturen der Ränder des Zwischenpolteiles (7) und der Hauptpolteile (1, 2) komplementär zueinander sind und einen gewundenen Luftspalt mit wenigstens annähernd konstanter Breite begrenzen.

3. Motor nach Anspruch 2, dadurch gekennzeichnet, dass der Winkelschritt ($\alpha$s) der genannten polaren Zähne unterschiedlich ist zu demjenigen der Pole des Rotors.

4. Motor nach Anspruch 3, dadurch gekennzeichnet, dass der Winkelschritt der polaren Zähne ($\alpha$s) durch die folgende Formel gegeben ist: $\alpha$s = k.2$\pi$/N, in welcher k ein Faktor zwischen 0,8 und 1,2 ist und 2$\pi$/N gleich dem Winkelschritt $\alpha$r der Pole des Rotors ist.

5. Motor nach Anspruch 1, dadurch gekennzeichnet, dass der magnetische Statorkreis wenigstens ein asymmetrisches Halteelement aufweist, welches befähigt ist, den Rotor während den Perioden zwischen den Impulsen in einer Winkelposition derart zu halten, dass ein Antriebsmoment auf den Rotor wirkt, wenn ein Strom in der Wicklung fliesst.

6. Motor nach Anspruch 5, dadurch gekennzeichnet, dass das asymmetrische Element mit einer Anzahl Öffnungen versehen ist, die in den Hauptpolteilen und/oder im Zwischenpolteil angeordnet sind.

7. Motor nach einem der vorhergehenden Ansprüche, dadurch gekennzeichnet, dass der Rotor dreissig Polpaare umfasst, die auf einer seiner Stirnflächen, welche den genannten Hauptpolteilen zugewandt ist, angeordnet sind.

## FIG. 1

## FIG. 2

## FIG. 3

$$\alpha_s = k\,\frac{2\pi}{N}$$

## FIG. 4

$$\alpha_r = \frac{2\pi}{N}$$

## FIG. 5

EP 0 356 396 B1

FIG. 8

FIG. 6

FIG. 7

9

## FIG. 9

## FIG. 10